**Europäisches Patentamt**

(19) **European Patent Office**

**Office européen des brevets**

(11) Publication number: **0 187 484**

**A1**

# (12) EUROPEAN PATENT APPLICATION

(21) Application number: **85308915.9**

(22) Date of filing: **06.12.85**

(51) Int. Cl.⁴: **G 05 D 23/13**
**G 05 D 11/16, E 03 C 1/05**

(30) Priority: **24.12.84 US 685793**

(43) Date of publication of application:
**16.07.86 Bulletin 86/29**

(84) Designated Contracting States:
**AT BE CH DE FR GB IT LI LU NL SE**

(71) Applicant: **NAIAD COMPANY USA**
**1516 Columbine Avenue**
**Boulder Colorado 80302(US)**

(72) Inventor: **Sable, Arthur J.**
**3430 Ash Avenue**
**Boulder Colorado 80303(US)**

(72) Inventor: **Sperling, Jac K.**
**820 Grant Place**
**Boulder Colorado 80303(US)**

(74) Representative: **Lambert, Hugh Richmond et al,**
**D. YOUNG & CO. 10 Staple Inn**
**London, WC1V 7RD(GB)**

(54) **Method and apparatus for controlling temperature of a liquid.**

(57) A temperature controlling method and apparatus are provided preferably using digital control and information stored in memory. The apparatus includes a number of on/off valves. A first set of valves (12, 16, 20, 24) is used to receive cold water and a second set of valves (14, 18, 22, 28) is used to receive hot water. The opening and closing of the valves is controlled by an electronic controller (84). Each of the valves is able to receive water from one of a plurality of orifices (36, 38, 40, 42, 44, 46, 48, 50). In the preferred arrangement, a first set of orifices (36, 40, 44, 48) supplies cold water to the first set of valves (12, 16, 20, 24) and a second set of orifices (38, 42, 46, 50) supplies hot water to the second set of valves (14, 18, 22, 28). The orifices of the second set are greater in size than are the corresponding orifices of the first set. The water from the valves and the orifices is combined in a common flow line (72). The temperature of the water in the common flow line is monitored and a signal indicative of the actual water temperature is outputted to the controller (84). The controller, using the stored information (88), acts to open and close the valves until a water mixture is achieved in which the actual, sensed temperature corresponds to a desired water temperature selected by the user of the apparatus. In reaching the desired water temperature, the controller is able to cause the opening of numerous combinations of valves utilizing stored data in a memory (88) accessed via a microprocessor (86).

./...

Croydon Printing Company Ltd.

FIG. 1

## METHOD AND APPARATUS FOR
## CONTROLLING TEMPERATURE OF A LIQUID

The present invention relates to a method and apparatus for controlling the temperature of a liquid and, in particular, to a method for monitoring and regulating water temperature under computer control.

Control systems have been previously devised for controlling the flow and/or temperature of fluids. In one such system, a number of two-way valves are provided with flow resistors connected thereto which are used to vary the volume of fluid flow therethrough. Each of the valves may be opened under the control of a computer or by using an A/D converter. At any instance in time, only one particular fluid moves through any one valve and flows to a common junction. The flow resistors are formed according to a binary arrangement whereby the volume of fluid through one flow resistor has a binary relationship to the volume of fluid through the remaining flow resistors. In another known system for controlling water temperature, continuously adjustable or infinitely variable valve openings are used to control the amount of water through the valves. This system compares a sensed, actual temperature and a desired temperature and provides control whereby the actual temperature is adjusted to correspond to the desired temperature.

The present invention is provided to overcome certain deficiencies associated with such systems and improve the operation of water temperature control to provide accurate, desired water temperatures.

In one aspect as disclosed herein, the method and apparatus of this invention utilize digital control and memory means for controlling on/off valves so that a selected water temperature is achieved.

In a second, and slightly broader aspect, the water temperature is controlled by two sets of on/off valves each associated with a set of orifices. The first set of orifices and valves receives hot water and a second set of orifices and valves receives cold water. The orifices of the first set preferably have a greater size opening than the orifices of the second set of orifices. This difference in opening size enables the temperature of water to be adjusted in smaller increments at the hotter end of the range of water temperatures that are available in connection with the present invention. In addition, because the invention uses on/off valves, and not finely adjustable

2                                              0187484

or infinitely variable valves, the cost of any valve replacement is reduced.

More specifically in accordance with the preferred aspects of this invention, a temperature controlling apparatus is provided for controlling the temperature of a liquid, preferably water. The apparatus includes an electronic controller including a memory for storing program information for controlling the activation of a number of solenoid actuators. Each of the actuators is mechanically linked to one on/off valve. Each of the valves is either fully opened or fully closed. In the preferred embodiment, some of the on/off valves receive relatively hot water and the remaining valves receive relatively cold water. In the preferred embodiment, an orifice is located upstream of each valve so that water is delivered to each valve from one orifice, while in another embodiment the orifices are located downstream of the valves.

With regard to the size of the orifices, for each orifice communicating with a cold water receiving valve, the preferred embodiment utilizes a binary relationship between each such orifice and the other orifices through which cold water flows to the valves. Similarly, in the preferred embodiment, there is a binary relationship betwen each orifice communicating through which hot water flows to the valves. Preferably also, the orifices associated with the hot water valves are greater in size than corresponding orifices associated with the cold water valves. The water outputted from the valves is received by a common flow line which carries the water to an output device, such as a shower head.

A temperature sensor is used to detect the temperature of the water in the common flow line. The output of the temperature sensor is sent to the controller. The controller compares an electrical signal representing this sensed, actual temperature of the water mixture with an electrical signal representing a desired temperature. The desired temperature is selected by the user of the apparatus and inputted to the controller. When the actual temperature is different from the desired temperature, the controller acts to control the on/off valves so that eventually a water mixture is provided in the common flow line having a temperature equal to the desired temperature. In controlling the temperature of the water mixture, a number of combinations of opened and closed valves are available. The controller acts to open or close valves using information or instructions stored in memory, together with the magnitude of the actual temperaure and the desired temperature to achieve the desired water temperature. Because the orifices in communication with the hot water valves are greater in size than the orifices in communication with corresponding cold water valves, a desired, relatively hot water temperature can be more accurately obtained due to the biasing associated with the hot water end of the range of available water temperatures.

Based on the foregoing description, it is readily seen that a number of objectives of the present invention are achieved. A relatively simple but efficient system is provided for regulating the temperature of water. Because a number of different combinations of opened on/off valves are available, finer control of water temperature is achievable. The providing of different on/off valve combinations is controlled using information stored in a pre-programmed memory. Fully opened or fully closed on/off valves are utilized because they are relatively inexpensive, unlike finely adjustable or infinitely variable valves which are expensive to manufacture. Relatedly, the valves of the present invention are less expensive to replace and there is no concern as to whether such a valve is properly opened to the desired extent since it is only required that the valve be fully opened or fully closed. Lastly, hot water orifices may be larger than corresponding cold water orifices so that a more accurate, desired water temperature at the hot water end of the range of water temperatures can be achieved.

Additional advantages of the present invention will become readily apparent from the following discussion when taken in conjuction with the accompanying drawings in which:

Figure 1 is a schematic diagram of a preferred embodiment of the present invention; and

Figure 2 illustrates a flow diagram relating to a control program for the present invention, e.g. the embodiment of Figure 1.

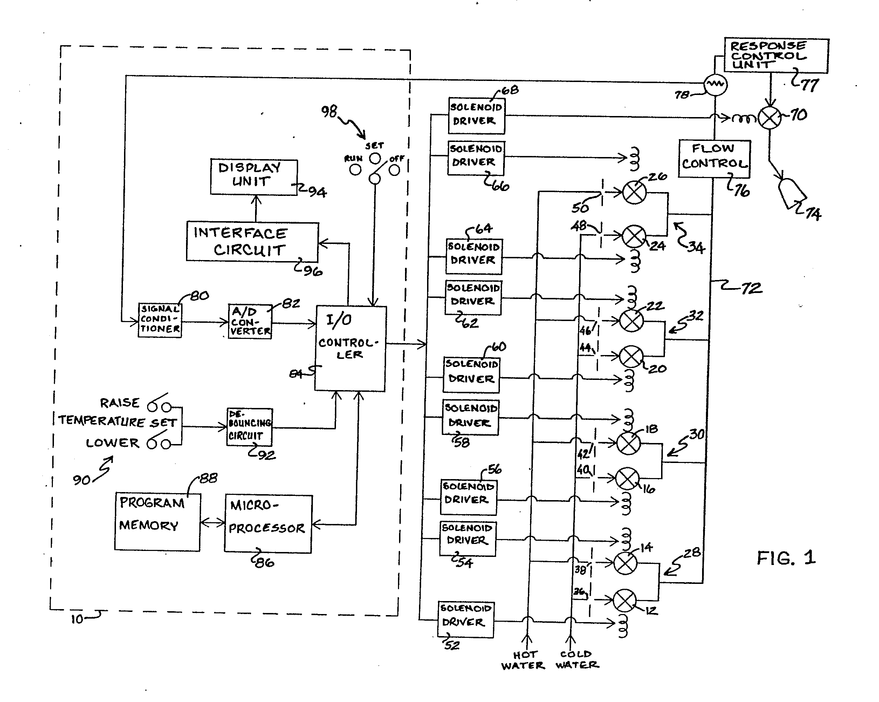

In accordance with the present invention, a liquid, preferably water, temperature controller is provided that includes an electronic controller 10, as illustrated schematically in Figure 1. The electronic controller 10, in combination with a system through which the water flows, monitors and controls the temperature of the water.

In the embodiment shown in Figure 1, the present invention includes eight valves 12, 14, 16, 18, 20, 22, 24, 26, although it should be understood that a greater number of valves could be provided for use in achieving greater water temperature accuracy while a lesser number of valves could also be used whereby less temperature accuracy over a range of temperatures would be achieved. The valves 12, 16, 20, 24 are used to receive cold water from a cold water line while the valves 14, 18, 22, 26 are used to receive hot water from a hot water line.

For the purposes of describing an embodiment of the invention, the valves 12-26 are illustrated as being grouped into pairs of valves 28, 30, 32, 34. Each valve pair 28-34 includes a valve for receiving hot water and a valve for receiving cold water. Although such a configuration is useful in describing the invention, it should be understood that valves 12-26 need not be grouped into such pairs because, for example, other groupings of valves are within the scope of the invention, with some of such valves for receiving cold water and other of such valves for receiving hot water.

Each of the valves 12-26 is an on/off valve in which the valve is either fully opened or fully closed. The valves 12-16 cannot be opened or closed according to incremental steps. Use of such on/off valves 12-26 reduces the cost of the present invention over such valves in which the openings therefor can be incrementally controlled.

The flow system further includes a number of flow control orifices 36-50. One of such orifices 36-50 is in communication with each of the valves 12-26 and the orifices 36-50 are located upstream of the valves 12-26. It should be understood, however, that orifices 36-50 could be located downstream of the valves 12-26. In the case in which the orifices 36-50 are located downstream, the number of orifices could be reduced by one-half because two valves, for example, could be connected to a single orifice.

In the preferred embodiment of the invention, the cold water receiving orifices 36, 40, 44, 48 are related in a binary manner with each other while hot water receiving orifices 38, 42, 46, 50 are related in a binary manner with each other. That is, for example, in the case of the orifice 36 and the orifice 40 both receiving cold water at the same time, the flow of cold water through the orifice 40 is twice as great as the flow of cold water through the orifice 36. Likewise, the flow of cold water through the orifice 44 is four times as great as the flow of cold water through the orifice 36, while the flow of cold water through the orifice 48 is eight times as great as the flow of cold water through the orifice 36. Similarly, the flow of hot water through the orifice 42 is twice as great as the flow of hot water through the orifice 38, while the flow of hot water through the orifice 46 is four times as great as the flow of hot water through the orifice 38, and the flow of hot water through the orifice 50 is eight times as great as the flow of hot water through the orifice 38.

Also, in a preferred embodiment, the flow control orifices 36, 40, 44, 48, are of different size opening than are the flow control orifices 38, 42, 46, 50. In particular, each of the hot water orifices 38, 42, 46, 50 is greater than its corresponding cold water orifice 36, 40, 44, 48, respectively, e.g. the hot water orifice 38 is greater in size than the cold water orifice 36.

This preferred sizing arrangement is utilized because the primary application of the present invention is controlling the temperature of water in a bath and shower system. A typical bather desires a water temperature in the range of from 38°C to 43°C (100°F to 110°F). Because the temperature of the hot water from a typical hot water system is about 60°C (140°F) while the cold water is about 13°C (55°F), to achieve the desired water temperature, greater accuracy of water temperature would be preferred near the hot water end and not at the cold water end of the range of possible water temperatures. This is accomplished by having a relatively greater volume of hot water mixed with the cold water to obtain a desired temperature of the bath or shower water. In that regard, the present invention utilizes relatively larger sized orifices 38, 42, 46, 50 for delivery of hot water to the corresponding valves 14, 18, 22, 26. With such an embodiment, as will be subsequently explained in greater detail, the present invention is able to provide more accurately a desired shower temperature in the range of temperatures under which a user typically takes a shower.

The flow system further includes a number of solenoid drivers 52-66. Each of the solenoid drivers 52-66 energizes a solenoid used in controlling the opening/closing one of the eight valves 12-26. The activation of the solenoid drivers 52-66 is controlled by the electronic controller 10. An additional solenoid driver 68, also controlled by the electronic controller 10, is in communication with a shutoff valve 70. The shutoff valve 70 is located in the path of a common flow line 72. The flow line 72 is connected to the outputs of the valves 12-26 and receives the water outputted from the valves 12-26 that are opened. The output of the shutoff valve 70 and the flow line 72 is a shower head 74, schematically illustrated in Figure 1, although it is appreciated that other output devices could be employed such

6                                    0187484

as a bath tap. The hot water and cold water outputted to the flow line 72 is mixed therein so that the mixed hot and cold water exits the shower head 74.

The flow system also includes a flow control 76 positioned in the flow line 72 for use in regulating the flow or volume of water to the shutoff valve 70 and the shower head 74. The flow control 76 is provided because the volume or amount of water into the common flow line 72 from the valves 12-26 is not always the same. This occurs because, in the preferred embodiment, one or more of the valves 12-26 may be opened or closed at any instance in time and also because of the difference in the size or openings between the hot water orifices 38, 42, 46, 50 and the cold water orifices 36, 40, 44, 48. To assure a desired, constant flow of water from the shower head 74, the flow control 76 is used. The flow control 76 is a conventional device and operates to control the flow of water so that the output therefrom is constant, after a minimum flow of water is received by the flow control 76.

The flow system may also include a response control unit 77 positioned upstream of the shower head 74. The unit 77 would be provided to minimize significant or abrupt changes in the temperature of the water exiting the shower head 74 that might arise. For example, in an instance in which a great change is to occur between the temperature of the water presently exiting the shower head 74 and the temperature of the water that was selected, it would be desirable for the user not to sense or feel this abrupt change in water temperature. To alleviate this concern, the response control unit 77, such as a section of pipe having a much greater diameter than that of the flow line 72, would be used so that the water accumulates in this pipe section before exiting the shower head 74 thereby effectively eliminating abrupt changes in the temperature of the water exiting the shower head 74. Related to the response control unit 77, a temperature sensor (not shown) may also be utilized adjacent thereto for use in providing the user with temperature of the water outputting the response control unit 77 so that the user is able to have an accurate indication of the temperature of the water outputted by the shower head 74.

A linking or interconnecting unit provided between the flow system and the electronic controller 10 is a temperature sensor 78. The temperature sensor 78 is preferably located in the common flow line 72 for sensing the temperature of the water to be outputted from the shower head 74. The temperature sensor 78 is electrically connected to the electronic controller 10 and, in particular, a temperature signal outputted by the temperature sensor 78 is inputted to a signal conditioner 80. The temperature signal relates to the temperature of the water sensed by the temperature sensor 78. The function of the signal conditioner 80 depends upon the kind of temperature sensor 78 that is employed, and the signal conditioner 80 may, for example, act to provide cold junction compensation or linearize the temperature signal, as is well known to one skilled in the art. The conditioned temperature signal is applied to an A/D converter. After the temperature signal is converted to digital form by the A/D converter 82, in a typical embodiment, it is inputted to an I/O controller 84 communicating with certian peripheral devices and a microprocessor 86. More specifically, the electronic controller 10 further includes the microprocessor 86 and a program memory 88, which communicates with the microprocessor 86. The program memory 88 stores an executable control program, as well as variable and permanent data, for use by the microprocessor 86 in monitoring and controlling the operation of the flow system of the present invention.

The peripheral equipment communicating wih the microprocessor 86 through the I/O controller 84 includes a switch unit 90. The switch unit 90 is provided so that the user of the present invention is able to select and input a desired or predetermined temperature for storage in the electronic controller 10 using the microprocessor 86. The desired temperature is stored for subsequent comparison with an actual temperature sensed by the temperature sensor 78. In one embodiment, the switch unit 90 includes a first switch for increasing or raising the desired temperature while a second switch is used in lowering or decreasing the desired temperature. The output of the switch 90 is applied to a debouncing circuit 92 which is used to eliminate the transient switching inherent in the switch unit 90 that occurs due to activation by the user of the switch unit 90 so that the desired temperature is inputted through the I/O controller 84 to the microprocessor 86. The predetermined or selected water temperature set by the user can be stored in a register located in the microprocessor 86 for comparison with the acutal temperature sensed by the temperature sensor 78, or the predetermined temperature value can be stored in the program memory 88 for later access and use by the microprocessor 86.

In conjuction with the predetermined temperature, the electronic controller 10 further includes a display unit 94 used to provide a visual display, when selected, of either the desired temperature selected by the user or the actual temperature of the water exiting the shower head 74. An interface circuit 96 provides the input to the display unit 94 and, in one embodiment, includes: a decoder for decoding the information received from the I/O controller 84 for energizing the proper LED segments of the display unit 94; a display driver circuit used to provide the necessary amplification of the digital signals relating to the displayed temperature; and a multiplexer which minimizes the circuitry required to provide a display of the temperature by controlling in a predetermined manner the desired inputs to the display driver circuit and the decoder so that the appropriate LED segments are not continuously lit.

The electronic controller 10 also includes a master switch 98 for providing a number of functions. The master switch 98 includes an Off position in which power is turned off to all of the valves 12-26, as well as the shutoff valve 70. When the master switch 98 is in its Off position, no water is able to be outputted from the valves 12-26. The master switch 98 also includes a Set position in which the valves 12-26 remain closed so that no water is able to flow through the valves 12-26, but the display unit 94 is operating and does display the predetermined temperature selected by the user. Further, the switch unit 90 is operative so that the predetermined temperature can be changed by the user for visual indication in the display unit 94. The master switch 98 also includes a Run position in which the shutoff valve 70 is opened and the valves 12-26 are also operative. In this position, water flows from the shower head 74 and the display unit 94 now visually indicates the actual water temperature detected by the temperature sensor 78.

The operation of the present invention is next discussed. In order that the water from the shower head 74 corresponds to a predetermined or desired temperature, the user places the master switch 98 in the Set position. Using the switch unit 90, the user is able to raise or lower the temperature displayed in the display unit 94 until it displays the desired or predetermined temperature selected by the user. At this time, the master switch 98 is moved to the Run position so that the water begins to flow through a number of the valves 12-26, which are in their opened position.

Once the water reaches the common flow line 72, the temperature of the water is sensed by the temperature sensor 78 and applied to the signal conditioner 80 and received by the microprocessor 86 through the analog/ digital converter 82 and the I/O controller 84. The temperature signal corresponding to the actual or sensed temperature is compared with the digital signal representing the previously inputted predetermined or desired temperature. This comparison is made in the microprocessor 86 under the control of a control program, which is stored in the program memory 88. In the case of a difference being determined between the predetermined temperature and the actual temperature sensed by the temperature sensor 78, the electronic controller 10 acts to adjust this difference so that the desired temperature of the water is reached. In controlling the temperature of the water from the shower head 74, the I/O controller 84 controls the supplying of power to a selected number of the solenoid drivers 52-66. The coils of the selected solenoid drivers 52-66 are thereby energized to open those valves 12-26 which correspond or communicate with the energized drivers 52-68. Depending upon which of the valves 12-26 is opened, the temperature of the water is able to change and move towards the desired temperature set by the user.

In connection with determining which of the valves 12-26 should be opened to achieve a particular water mixture, reference is made to the following Water Mixture Table in which selected combinations of opened/ closed valves of the valve pairs 28-34 are shown.

0187484

## WATER MIXTURE TABLE

| CONTROL POSITION | PROPORTION OF HOT WATER | VALVE PAIR 28 | | VALVE PAIR 30 | | VALVE PAIR 32 | | VALVE PAIR 34 | |
|---|---|---|---|---|---|---|---|---|---|
| 1 | 0/15 = .00 | 0 | 1 | 0 | 1 | 0 | 1 | 0 | 1 |
| 2 | 2/17 = .118 | 1 | 1 | 0 | 1 | 0 | 1 | 0 | 1 |
| 3 | 2/16 = .125 | 1 | 0 | 0 | 1 | 0 | 1 | 0 | 1 |
| 4 | 2/15 = .133 | 1 | 1 | 0 | 0 | 0 | 1 | 0 | 1 |
| 5 | 2/14 = .143 | 1 | 0 | 0 | 0 | 0 | 1 | 0 | 1 |
| 6 | 2/13 = .154 | 1 | 1 | 0 | 1 | 0 | 0 | 0 | 1 |
| 7 | 2/12 = .167 | 1 | 0 | 0 | 1 | 0 | 0 | 0 | 1 |
| 8 | 2/11 = .182 | 1 | 1 | 0 | 0 | 0 | 0 | 0 | 1 |
| 9 | 2/10 = .20 | 1 | 0 | 0 | 0 | 0 | 0 | 0 | 1 |
| 10 | 4/19 = .211 | 0 | 1 | 1 | 1 | 0 | 1 | 0 | 1 |
| 11 | 4/18 = .222 | 0 | 0 | 1 | 1 | 0 | 1 | 0 | 1 |
| 12 | 4/17 = .235 | 0 | 1 | 1 | 0 | 0 | 1 | 0 | 1 |
| 13 | 4/16 = .25 | 0 | 0 | 1 | 0 | 0 | 1 | 0 | 1 |
| 14 | 4/15 = .267 | 0 | 1 | 1 | 1 | 0 | 0 | 0 | 1 |
| 15 | 4/14 = .286 | 0 | 0 | 1 | 1 | 0 | 0 | 0 | 1 |
| 16 | 6/20 = .30 | 1 | 0 | 1 | 1 | 0 | 1 | 0 | 1 |
| 17 | 4/13 = .308 | 0 | 1 | 1 | 0 | 0 | 0 | 0 | 1 |
| 18 | 6/19 = .316 | 1 | 1 | 1 | 0 | 0 | 1 | 0 | 1 |
| 19 | 6/18 = .333 | 1 | 0 | 1 | 0 | 0 | 1 | 0 | 1 |
| 20 | 8/23 = .348 | 0 | 1 | 0 | 1 | 1 | 1 | 0 | 1 |
| 21 | 6/17 = .353 | 1 | 1 | 1 | 1 | 0 | 0 | 0 | 1 |
| 22 | 8/22 = .364 | 0 | 0 | 0 | 1 | 1 | 1 | 0 | 1 |
| 23 | 6/15 = .375 | 1 | 0 | 1 | 1 | 0 | 0 | 0 | 1 |
| 24 | 8/21 = .381 | 0 | 1 | 0 | 0 | 1 | 1 | 0 | 1 |
| 25 | 8/20 = .40 | 0 | 0 | 0 | 0 | 1 | 1 | 0 | 1 |
| 26 | 10/24 = .417 | 1 | 0 | 0 | 1 | 1 | 1 | 0 | 1 |
| 27 | 8/19 = .421 | 0 | 1 | 0 | 1 | 1 | 0 | 0 | 1 |
| 28 | 6/14 = .429 | 1 | 0 | 1 | 0 | 0 | 0 | 0 | 1 |
| 30 | 8/18 = .444 | 0 | 0 | 0 | 1 | 1 | 0 | 0 | 1 |
| 31 | 10/22 = .455 | 1 | 0 | 0 | 0 | 1 | 1 | 0 | 1 |
| 32 | 12/26 = .462 | 0 | 0 | 1 | 0 | 1 | 1 | 0 | 1 |
| 33 | 8/17 = .471 | 0 | 1 | 0 | 0 | 1 | 0 | 0 | 1 |
| 34 | 10/21 = .476 | 1 | 1 | 0 | 1 | 1 | 0 | 0 | 1 |
| 35 | 12/25 = .480 | 0 | 1 | 1 | 0 | 1 | 1 | 0 | 1 |
| 36 | 14/29 = .483 | 1 | 1 | 1 | 1 | 1 | 1 | 0 | 1 |
| 37 | 14/28 = .50 | 1 | 0 | 1 | 1 | 1 | 1 | 0 | 1 |
| 38 | 16/31 = .516 | 0 | 1 | 0 | 1 | 0 | 1 | 1 | 1 |
| 39 | 14/27 = .519 | 1 | 1 | 1 | 0 | 1 | 1 | 0 | 1 |
| 40 | 12/23 = .522 | 0 | 1 | 1 | 1 | 1 | 0 | 0 | 1 |
| 41 | 10/19 = .526 | 1 | 1 | 0 | 0 | 1 | 0 | 0 | 1 |
| 42 | 16/30 = .533 | 0 | 0 | 0 | 1 | 0 | 1 | 1 | 1 |
| 43 | 14/26 = .538 | 1 | 0 | 1 | 0 | 1 | 1 | 0 | 1 |
| 44 | 12/22 = .545 | 0 | 0 | 1 | 1 | 1 | 0 | 0 | 1 |
| 45 | 10/29 = .552 | 0 | 1 | 0 | 0 | 0 | 1 | 1 | 1 |
| 46 | 10/18 = .556 | 1 | 0 | 0 | 0 | 1 | 0 | 0 | 1 |
| 47 | 14/25 = .560 | 1 | 1 | 1 | 1 | 1 | 0 | 0 | 1 |
| 48 | 18/32 = .563 | 1 | 0 | 0 | 1 | 0 | 1 | 1 | 1 |
| 49 | 16/28 = .571 | 0 | 0 | 0 | 0 | 0 | 1 | 1 | 1 |
| 50 | 18/31 = .581 | 1 | 1 | 0 | 0 | 0 | 1 | 1 | 1 |

| CONTROL POSITION | PROPORTION OF HOT WATER | VALVE PAIR 28 | | VALVE PAIR 30 | | VALVE PAIR 32 | | VALVE PAIR 34 | |
|---|---|---|---|---|---|---|---|---|---|
| 51 | 14/24 = .583 | 1 | 0 | 1 | 1 | 1 | 0 | 0 | 1 |
| 52 | 20/34 = .588 | 0 | 0 | 1 | 1 | 0 | 1 | 1 | 1 |
| 53 | 16/27 = .593 | 0 | 1 | 0 | 1 | 0 | 0 | 1 | 1 |
| 54 | 22/37 = .595 | 1 | 1 | 1 | 1 | 0 | 1 | 1 | 1 |
| 55 | 18/30 = .60 | 1 | 0 | 0 | 0 | 0 | 1 | 1 | 1 |
| 56 | 20/33 = .606 | 0 | 1 | 1 | 0 | 0 | 1 | 1 | 1 |
| 57 | 14/23 = .609 | 1 | 1 | 1 | 0 | 1 | 0 | 0 | 1 |
| 58 | 22/36 = .611 | 1 | 0 | 1 | 1 | 0 | 1 | 1 | 1 |
| 59 | 16/26 = .615 | 0 | 0 | 0 | 1 | 0 | 0 | 1 | 1 |
| 60 | 18/29 = .621 | 1 | 1 | 0 | 1 | 0 | 0 | 1 | 1 |
| 61 | 20/32 = .625 | 0 | 0 | 1 | 0 | 0 | 1 | 1 | 1 |
| 62 | 22/35 = .629 | 1 | 1 | 1 | 0 | 0 | 1 | 1 | 1 |
| 63 | 24/38 = .632 | 0 | 0 | 0 | 1 | 1 | 1 | 1 | 1 |
| 64 | 26/41 = .634 | 1 | 1 | 0 | 1 | 1 | 1 | 1 | 1 |
| 65 | 14/22 = .636 | 1 | 0 | 1 | 0 | 1 | 0 | 0 | 1 |
| 66 | 16/25 = .640 | 0 | 1 | 0 | 0 | 0 | 0 | 1 | 1 |
| 67 | 18/28 = .643 | 1 | 0 | 0 | 1 | 0 | 0 | 1 | 1 |
| 68 | 20/31 = .645 | 0 | 1 | 1 | 1 | 0 | 0 | 1 | 1 |
| 69 | 22/34 = .647 | 1 | 0 | 1 | 0 | 0 | 1 | 1 | 1 |
| 70 | 24/37 = .649 | 0 | 1 | 0 | 0 | 1 | 1 | 1 | 1 |
| 71 | 26/40 = .65 | 1 | 0 | 0 | 1 | 1 | 1 | 1 | 1 |
| 72 | 28/43 = .651 | 0 | 1 | 1 | 1 | 1 | 1 | 1 | 1 |
| 73 | 30/45 = .667 | 1 | 1 | 1 | 1 | 1 | 1 | 1 | 1 |
| 74 | 30/44 = .682 | 1 | 0 | 1 | 1 | 1 | 1 | 1 | 1 |
| 75 | 28/41 = .683 | 0 | 1 | 1 | 0 | 1 | 1 | 1 | 1 |
| 76 | 26/38 = .684 | 1 | 0 | 0 | 0 | 1 | 1 | 1 | 1 |
| 77 | 24/35 = .686 | 0 | 1 | 0 | 1 | 1 | 0 | 1 | 1 |
| 78 | 22/32 = .688 | 1 | 0 | 1 | 1 | 0 | 0 | 1 | 1 |
| 79 | 20/29 = .69 | 0 | 1 | 1 | 0 | 0 | 0 | 1 | 1 |
| 80 | 18/26 = .692 | 1 | 0 | 0 | 0 | 0 | 0 | 1 | 1 |
| 81 | 16/23 = .696 | 0 | 1 | 0 | 1 | 0 | 1 | 1 | 0 |
| 82 | 30/43 = .698 | 1 | 1 | 1 | 0 | 1 | 1 | 1 | 1 |
| 83 | 28/40 = .70 | 0 | 0 | 1 | 0 | 1 | 1 | 1 | 1 |
| 84 | 26/37 = .703 | 1 | 1 | 0 | 1 | 1 | 0 | 1 | 1 |
| 85 | 24/34 = .706 | 0 | 0 | 0 | 1 | 1 | 0 | 1 | 1 |
| 86 | 22/31 = .71 | 1 | 1 | 1 | 0 | 0 | 0 | 1 | 1 |
| 87 | 20/28 = .714 | 0 | 0 | 1 | 0 | 0 | 0 | 1 | 1 |
| 88 | 28/39 = .718 | 0 | 1 | 1 | 1 | 1 | 0 | 1 | 1 |
| 89 | 18/25 = .72 | 1 | 1 | 0 | 1 | 0 | 1 | 1 | 0 |
| 90 | 26/36 = .722 | 1 | 0 | 0 | 1 | 1 | 0 | 1 | 1 |
| 91 | 24/33 = .727 | 0 | 1 | 0 | 0 | 1 | 0 | 1 | 1 |
| 92 | 30/41 = .732 | 1 | 1 | 1 | 1 | 1 | 0 | 1 | 1 |
| 93 | 22/30 = .733 | 1 | 0 | 1 | 0 | 0 | 0 | 1 | 1 |
| 94 | 28/38 = .737 | 0 | 0 | 1 | 1 | 1 | 0 | 1 | 1 |
| 95 | 20/27 = .741 | 0 | 1 | 1 | 1 | 0 | 1 | 1 | 0 |
| 96 | 26/35 = .743 | 1 | 1 | 0 | 0 | 1 | 0 | 1 | 1 |
| 97 | 24/32 = .750 | 0 | 0 | 0 | 0 | 1 | 0 | 1 | 1 |
| 98 | 22/29 = .759 | 1 | 1 | 1 | 1 | 0 | 1 | 1 | 0 |
| 99 | 16/21 = .762 | 0 | 1 | 0 | 0 | 0 | 1 | 1 | 0 |
| 100 | 26/34 = .765 | 1 | 0 | 0 | 0 | 1 | 0 | 1 | 1 |

| CONTROL POSITION | PROPORTION OF HOT WATER | VALVE PAIR 28 | | VALVE PAIR 30 | | VALVE PAIR 32 | | VALVE PAIR 34 | |
|---|---|---|---|---|---|---|---|---|---|
| 101 | 20/26 = .769 | 0 | 1 | 0 | 1 | 1 | 1 | 1 | 0 |
| 102 | 24/31 = .774 | 1 | 0 | 1 | 0 | 1 | 1 | 0 | 0 |
| 103 | 28/36 = .778 | 0 | 0 | 1 | 0 | 1 | 0 | 1 | 1 |
| 104 | 18/23 = .783 | 1 | 1 | 0 | 0 | 0 | 1 | 1 | 0 |
| 105 | 22/28 = .786 | 1 | 0 | 1 | 1 | 0 | 1 | 1 | 0 |
| 106 | 26/29 = .788 | 1 | 1 | 0 | 1 | 1 | 0 | 1 | 0 |
| 107 | 30/38 = .789 | 1 | 0 | 1 | 0 | 1 | 0 | 1 | 1 |
| 108 | 23/35 = .80 | 0 | 1 | 1 | 1 | 1 | 1 | 1 | 0 |
| 109 | 30/37 = .811 | 1 | 1 | 1 | 1 | 1 | 1 | 1 | 0 |
| 110 | 26/32 = .813 | 1 | 0 | 0 | 1 | 1 | 1 | 1 | 0 |
| 111 | 22/27 = .815 | 1 | 1 | 1 | 0 | 0 | 1 | 1 | 0 |
| 112 | 18/22 = .818 | 1 | 0 | 0 | 0 | 0 | 1 | 1 | 0 |
| 113 | 28/34 = .824 | 0 | 0 | 1 | 1 | 1 | 1 | 1 | 0 |
| 114 | 24/29 = .828 | 0 | 1 | 0 | 0 | 1 | 1 | 1 | 0 |
| 115 | 30/36 = .833 | 1 | 0 | 1 | 1 | 1 | 1 | 1 | 0 |
| 116 | 26/31 = .839 | 1 | 1 | 0 | 0 | 1 | 1 | 1 | 0 |
| 117 | 16/19 = .842 | 0 | 1 | 0 | 1 | 0 | 0 | 1 | 0 |
| 118 | 22/26 = .846 | 1 | 0 | 1 | 0 | 0 | 1 | 1 | 0 |
| 119 | 28/33 = .848 | 0 | 1 | 1 | 0 | 1 | 1 | 1 | 0 |
| 120 | 24/28 = .857 | 0 | 0 | 0 | 0 | 1 | 1 | 1 | 0 |
| 121 | 26/32 = .867 | 1 | 0 | 0 | 0 | 1 | 1 | 1 | 0 |
| 122 | 20/23 = .870 | 0 | 1 | 1 | 1 | 0 | 0 | 1 | 0 |
| 123 | 28/37 = .875 | 0 | 0 | 1 | 0 | 1 | 1 | 1 | 0 |
| 124 | 22/25 = .886 | 1 | 1 | 1 | 1 | 0 | 0 | 1 | 0 |
| 125 | 30/34 = .882 | 1 | 0 | 1 | 0 | 1 | 1 | 1 | 0 |
| 126 | 24/27 = .889 | 0 | 1 | 0 | 1 | 1 | 0 | 1 | 0 |
| 127 | 26/29 = .897 | 1 | 1 | 0 | 1 | 1 | 0 | 1 | 0 |
| 128 | 18/20 = .90 | 1 | 0 | 0 | 1 | 0 | 0 | 1 | 0 |
| 129 | 28/31 = .903 | 0 | 1 | 1 | 1 | 1 | 0 | 1 | 0 |
| 130 | 20/22 = .909 | 0 | 0 | 1 | 1 | 0 | 0 | 1 | 0 |
| 131 | 22/24 = .917 | 1 | 0 | 1 | 0 | 0 | 1 | 1 | 0 |
| 132 | 24/26 = .923 | 0 | 0 | 0 | 1 | 1 | 0 | 1 | 0 |
| 133 | 26/29 = .929 | 1 | 0 | 0 | 1 | 1 | 0 | 1 | 0 |
| 134 | 28/30 = .933 | 0 | 0 | 1 | 1 | 1 | 0 | 1 | 0 |
| 135 | 30/32 = .935 | 1 | 0 | 1 | 1 | 1 | 0 | 1 | 0 |
| 136 | 16/17 = .941 | 0 | 1 | 0 | 0 | 0 | 0 | 1 | 0 |
| 137 | 18/19 = .947 | 1 | 1 | 0 | 0 | 0 | 0 | 1 | 0 |
| 138 | 20/21 = .952 | 0 | 1 | 1 | 0 | 0 | 0 | 1 | 0 |
| 139 | 27/23 = .957 | 1 | 1 | 1 | 0 | 0 | 0 | 1 | 0 |
| 140 | 24/25 = .960 | 0 | 1 | 0 | 0 | 1 | 0 | 1 | 0 |
| 141 | 26/27 = .963 | 1 | 1 | 0 | 0 | 1 | 0 | 1 | 0 |
| 142 | 28/29 = .966 | 0 | 1 | 1 | 0 | 1 | 0 | 1 | 0 |
| 143 | 30/31 = .969 | 1 | 1 | 1 | 0 | 1 | 0 | 1 | 0 |
| 144 | 30/30 = 1.00 | 1 | 0 | 1 | 0 | 1 | 0 | 1 | 0 |

All valve combinations need not be used since there are redundant valve combinations. For the four valve pairs 28-34 of this embodiment, one hundred and forty-four, non-redundant, control positions are available to the user, and with each different control position, a different set of valves is opened and a different proportion of hot water is achieved.

An opened valve is represented or indicated by the binary number one while a closed valve is represented or indicated by the binary number zero. As can be seen from the Water Mixture Table, in Control Position No. 1, the valves through which cold water flows are all open while the valves through which hot water flows are all closed. Consequently the column of the table illustrating the proportion or amount of hot water relative to the cold water indicates that no part of the total water flow includes hot water. At the opposite end of the table, all of the valves receiving hot water are open while all of the valves through which cold water flows are closed. In this Control Position No. 144, the proportion of hot water to the total amount of water is one, i.e. all of the water from the shower head 74 is hot water.

It is also appreciated from the Water Mixture Table that the valves 12-26 are either fully closed or fully opened, there being no state in which a valve is partially opened or partially closed. Additionally, as can be understood from the table, in the preferred embodiment of the invention, both the hot water valve and the cold water valve of one pair of valves can be fully opened or fully closed at one time or only one of the two valves of the valve pair may be fully opened. This capability permits relatively fewer valves to be used to achieve various water temperatures. Relatedly, also because of this feature, the present invention is able to provide a greater number of combinations of opened/closed valves. As a result, there is a greater number of available water temperatures that can be selected for a given number of valve pairs, thereby affording the user greater flexibility in selecting and achieving a desired water temperature. By way of example, in the embodiment having four valves pairs, one hundred and forty-four control positions are available providing a different percentage of hot water. In a case in which only one valve of a valve pair could be opened at any one time, the number of such available choices is reduced. With this reduced number of available settings, the user would not be able to achieve the same number of water temperatures. It should also be understood that valve pairs need not be used. Rather, for example, there can be a number of hot water valves different from the number of cold water valves.

The proportion of hot water in the water mixture, with regard to the remaining Control Positions Nos. 2-143, is determined by the size of the orifices 36-50, which are in communication with the valves 12-26. As previously discussed, in the preferred embodiment of the invention, the orifices receiving the hot water are of a relatively greater size than the orifices receiving the cold water, for each of the valves 12-26. In the embodiment of the Water Mixture Table, each of the hot water orifices is twice the opening of the cold water orifice of the same valve pair. It is noted, however, that other size differences can be employed if a different biasing of the range of water temperatures is desired.

The larger sized orifices for receiving hot water provide an important advantage relating to the selection of water temperature. In a typical hot water system, the temperature of the hot water is about 60°C (140°F). The temperature of the cold water is about 13°C (55°F). The average shower user desires a water temperature in the range 38°C to 43°C (100°F to 110°F). Because the water temperature desired by the user is closer to the hot water temperature, it would be desirable to provide greater water temperature control or accuracy at the high temperature end of the range of water temperatures. For example, assuming that the temperature of the cold water is 13°C (55°F) so that, at Control Position No. 1, the temperature of the water from the shower head 74 is about 13°C (55°F). Further assuming that the temperature of the hot water is 60°C (140°F) so that at Control Position No. 144 the temperature of the water is 60°C (140°F), with the same water flow rate as that of Control Position No. 1, it would be desirable to have more control positions in the range of the temperatures which are actually utilized by the user when taking a shower. The relatively larger sized hot water orifices 38, 42, 46, 50, in communication with the hot water valves 14, 18, 22, 26 enable this to be accomplished as such orifices 38, 42, 46, 50 bias or adjust the possible combinations of water temperatures towards the hot water end so that finer increments of water mixtures can be achieved at the higher end of the temperature range than are achieved at the lower end. In the present example, for Control Position No. 73 in which all valves 12-26 are fully opened, instead of a water temperature of about 36°C (97.5°F), mid temperature between 13°C (55°F) and 60°C (140°F), a temperature greater than that results. With respect to the embodiment utilizing the Water Mixture Table, the amount of hot water is twice as great as the amount of cold water so that a water temperature of about 44°C (111°F) results.

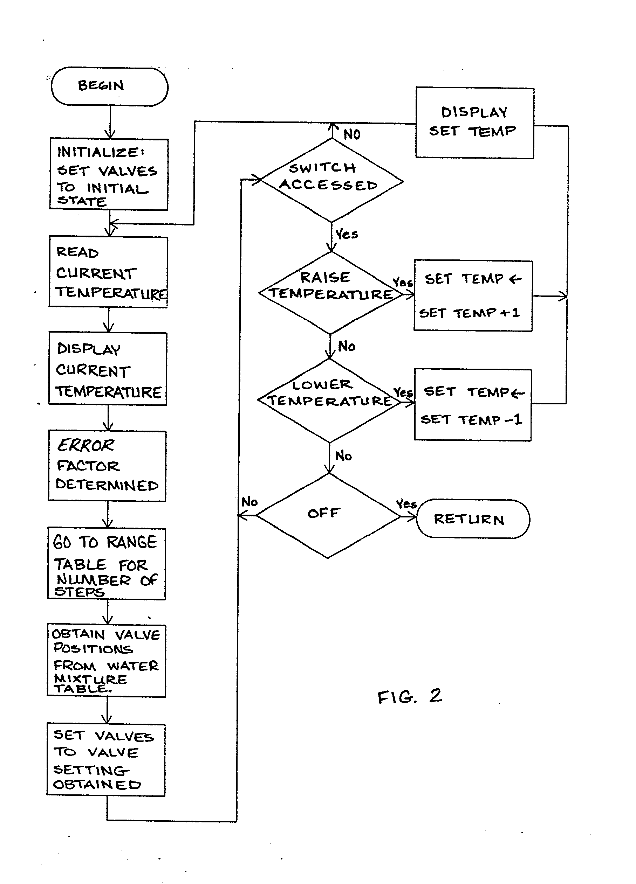

In connection with controlling the water temperature, the microprocessor 86 uses a control program stored in the program memory 88. In one method of controlling the opening/closing of valves to reach the combination of valve openings for providing a desired water temperature, the control program causes the combination of the valve openings to be changed according to the method disclosed in the flow diagram of Figure 2. In particular, the method involves the determination of an error factor (EF), the magnitude and sign of which is used in determining which combination of valve openings, in the Water Mixture Table, that should be used to achieve a desired temperature.

More specifically, with reference to Figure 2, the system is initiated including the setting of the valves 12-26 to an initial state for providing a desired, initial water temperature. The actual temperature is then sensed and displayed. Then, using the desired temperature inputted by the user and the actual temperature, the error factor is determined. In one embodiment of the invention, EF = (set temperature) - (current temperature) - X ((current temperature) - (last current temperature)), where X is a coefficient that is predetermined and stored in memory.

With the error factor determined, the method of the present invention then determines which of the number of valve combinations should be selected to reduce the difference between the actual temperature and the desired temperature. In that regard, a Range Table is determined and stored in memory. The Range Table consists of a number of error factors and a number of steps to be taken or moved from the current position in the Water Mixture Table. Each error factor or range of error factors has a corresponding number of steps in the defined Range Table. By way of example only, for error factors having a value or magnitude of 4-6, the corresponding number of steps in the defined Range Table may be 5. This means that if the current position of the valves, for example, is defined by Control Position No. 72 and the error factor equals 6, then the number of steps to be taken to arrive at the selected valve combination equals 5. Continuing with this example, since the number of steps to be taken equals 5, the new control position would be Control Position No. 77. To further illustrate the Range Table, for error factors having a value or range of 10-12 the corresponding number of steps in the Range Table may be 12. This means that if an error factor of 10 is determined, the next valve combination to be selected is 12 steps away in the Water Mixture Table from the current control position. In the case of the current position being Control Position No. 72, the next selected valve combination would be defined by Control Position No. 84.

As can be seen from these two examples, generally speaking the greater the value of the error factor, the greater is the number of steps to be taken to arrive at the next selected combination of valve positions. It should also be understood that the Range Table also includes a number of error factors in which each of such error factors or range of error factors has a corresponding number of steps that is negative in value. In such a case, the next selected control position number is less than the current control position number.

Once the next combination of valve openings is determined using the Water Mixture Table, the controller then causes the selected valves to be opened. With this next selected combination of valve openings, the control program then causes a repeating of the steps shown in Figure 2, starting with the reading of the current or actual temperature. The control program also determines, as illustrated in Figure 2, whether the user has changed the set or desired temperature so that this information can be incorporated into the steps necessary for determining the combination of valves to be opened and/or closed.

Although the foregoing relates to a preferred method for providing a selected combination of valve openings, another method may be utilized whereby any difference between the actual water temperature and the desired water temperature is reduced in an incremental manner. That is, in the case of the actual water temperature being different from the desired water temperature, different valves can be opened in successive steps until the actual temperature of the water corresponds to the desired temperature. Each successive step, having a different valve combination, results in an actual water temperature which is different from the previous water temperature, and which is also less than any other possible temperature change available using any other possible combination of valve openings. In such a manner, the electronic controller is able to cause the least amount of

17

0187484

water temperature change between a first combination of valve openings and the next selected combination of valve openings that is available as compared with all other combinations of valve openings which could be selected.

It should be understood that, although the preferred embodiment describes the use of a particular electronic controller, a number of different kinds of controllers could be used in combination with the different sized orifices to open or close any combination of valves. It should also be understood that, although the present invention is directed to providing greater control at the hot water end of the water temperature range, the larger sized orifices could be used with the cold water receiving valves so that greater control is provided at the cold water end of the water temperature range. It should further be appeciated that, although four hot water valves and four cold water valves are described, any different number of valves for receiving hot or cold water could be employed.

In view of the foregoing description, a number of advantages of the present invention are readily discerned. A water temperature controller is provided having a particular application as part of a shower and bath system. The present invention controls the temperature of the water using an electronic controller and information stored in memory so that a predetermined and desired water temperature is achieved. The present invention utilizes on/off valves which are relatively inexpensive. The number of such valves can be minimized, while the number of combinations of water temperatures can be maximized, by the implementation in which numerous combinations of valves can be opened. In one embodiment, each of the orifices through which hot water flows is of a relatively greater size than each of the corresponding orifices for the same valve pair through which the cold water flows. As a result of this feature, greater temperature control is achieved and the user is able to obtain finer increments of water mixtures at the higher end of the water temperature range. Accordingly, finer increments of water tmeperature are available to the user.

Although the present invention has been described with referene to particular embodiments, it should be understood that further variations and modifications can be effected within the scope of the invention as defined by the appended claims.

CLAIMS

1.    A method of providing a continuous flow of liquid at a controlled temperature, which comprises feeding to a common outlet two or more streams of said liquid, each at a different temperature, mixing said two or more streams to provide a single outlet stream at a given temperature, constantly monitoring the temperature of the outlet stream, and automatically adjusting the relative flow rates of the inlet streams to maintain a substantially constant outlet temperature, characterised by

(i)    feeding a first stream of liquid at a first temperature to a plurality of on/off valves (14, 18, 22, 26) connected in parallel,

(ii)    feeding a second stream of liquid at a lower temperature to a second plurality of on/off valves (12, 16, 20, 24) also connected in parallel,

(iii)    selectively opening one or more of said on/off valves (12, 14, 16, 18, 20, 22, 24, 26) to feed either or both said liquid streams to said outlet (74),

(iv)    continuously sensing (78) the temperature of the combined liquid stream fed to said outlet (74) from said valve or valves (12, 14, 16, 18, 20, 22, 24, 26),

(v)    comparing (84) the sensed temperature with a predetermined desired value, and if there is a difference between the two,

(vi)    accessing a memory (88) containing stored information relating to the ratio of the hotter and cooler liquid streams available through selected ones of said values according to the various different combinations obtainable by the opening and shutting of said valves,

(vii)    selecting, in accordance with said stored information, a valve or combination of valves which are to be opened or shut to reduce the difference between the sensed temperature of the liquid and the desired temperature, and

(viii)    opening or closing said selected valve or combination of valves.

2.    A method according to claim 1, characterised in that each of said valves (12, 14, 16, 18, 20, 22, 24, 26) is associated with an orifice (36, 38, 40, 42, 44, 46, 48, 50) through which the liquid flows upon entry to or upon leaving the valve, at least one of the orifices (38, 42, 46, 50) associated with the first plurality of valves (14, 18, 22, 26) being larger than at least one of the orifices (36, 40, 44, 48) associated with said second plurality of valves (12, 16, 20, 24), whereby the flow rate of liquid through that orifice and its associated valve is greater than the flow rate of liquid through that other orifice and its associated valve.

3. A method according to claim 2, wherein all the orifices (38, 42, 46, 50) of the first set are larger than the orifices (36, 40, 44, 48) of the second set.

4. A method according to claim 2 or 3, characterised in that in at least one of the sets of orifices (38, 42, 46, 50; and 36, 40, 44, 48) the orifice openings are all of a different size whereby when open, each valve delivers a different flow rate of the respective first and/or second liquid stream.

5. A method according to claim 4, characterised in that, within at least one of the sets of orifices (36, 40, 44, 48; and 38, 42, 46, 50) the size of the orifices increases in a binary progression whereby the flow rate of the hotter or the cooler liquid, as the case may be, through the second or each succeeding valve of the progression is double that of the immediately preceding valve.

6. A method according to any one of claims 1-5, characterised in that the flow rate of the outlet stream is controlled (76) at a substantially constant value.

7. A method according to any one of claims 1-6, characterised in that the outlet stream passes through a response control unit (77) which eliminates abrupt temperature changes in the outlet stream due to the opening and/or closing of said selected valve or combination of valves.

8. A method according to any one of claims 1-7, characterised in that step (vii) comprises selecting the valves to be opened or closed according to a predetermined sequence.

9. A method according to claim 8, characterised in that said sequence is predetermined according to the magnitude of the difference between the sensed temperature of the outlet stream and the predetermined desired temperature.

10. A method according to claim 8 or 9, characterised in that said predetermined sequence includes opening and/or closing the valves as a series of incremental steps, each of said incremental steps being such that the change in outlet temperature between a first combination of valve openings and the next selected combination of valve openings results in the least amount of temperature change as compared with all other combinations of valve openings that could be selected.

11. A method according to any one of claims 1-10, characterised in that the liquid is water.

12. A method according to claim 11, wherein the outlet stream has a temperature in the range 38°C to 43°C (100°F to 110°F) and the first and second inlet streams are respectively above and below that range.

13. Apparatus for providing a continuous, temperature controlled flow of liquid, comprising a first inlet for a first stream of liquid at a first temperature, a second inlet for a second stream of liquid at a second temperature which is lower than said first temperature, a valve means for controlling said first stream of liquid, a valve means for controlling said second stream of liquid, a common outlet for discharging said liquid streams as a combined, single outlet stream, means for continuously sensing the temperature of the outlet stream and means for automatically adjusting the relative settings of said valve means thereby to maintain said outlet temperature substantially constant, said apparatus being characterised by:

(i) a first plurality of on/off valves (14, 18, 22, 26) connected in parallel to said first inlet and to said outlet (74), said on/off valves each having only two settings: fully open or fully closed;

(ii) a second plurality of on/off valves (12, 16, 20, 24) connected in parallel to said second inlet and to said outlet (74), said on/off valves likewise each having only two settings: fully open or fully closed;

(iii) a memory (88) for storing information relating to the ratio of

21 0187484

the hotter and cooler liquid streams that are available through selected ones of said valves according to the various different combinations obtainable by the opening and shutting of said valves;

(iv) processing means (86) for accessing the memorised information and selecting, according to that information, a valve or combination of valves to be opened or closed in order to reduce the difference, if any, between the measured outlet temperature and a predetermined desired temperature; and

(v) means (84) for operating the selected valve or valves according to the selected pattern.

14. Apparatus according to claim 13, characterised in that each of said valves (12, 14, 16, 18, 20, 22, 24, 26) has an orifice (36, 38, 40, 42, 44, 46, 48 50) associated therewith, at least one of the orifices (38, 42, 46, 50) associated with the first plurality of valves (14, 28, 22, 26) being larger or smaller than at least one of the orifices (36, 40, 44, 48) associated with said second plurality of valves (12, 16, 20, 24).

15. Apparatus according to claim 14, characterised in that in at least one of the sets of orifices (38, 42, 46, 50 and 36, 40, 44, 48) the orifice openings are all of a different size.

16. Apparatus according to claim 15, characterised in that within at least one set of orifices (36, 40, 44, 48 and 38, 42, 46, 50) the size of the orifices increases in a binary progression.

17. Apparatus according to claim 14, 15 or 16, characterised in that the orifices are located upstream of their respective valves.

18. Apparatus according to any one of claims 13-17, including means (76) for automatically controlling the flow rate of the combined liquid stream flowing to the outlet.

19. Apparatus according to any one of claims 13-18, including response control means (77) operative to reduce sudden temperature changes in the outlet stream responsive to changes in said valve settings.

**0187484**

20.     Apparatus according to any one of claims 13-19, characterised in that the processing means (86) is programmed to access said memory (88) and to select a predetermined sequence of valves to be opened or closed to reduce the difference, if any, between the measured temperature and the predetermined desired temperature, that sequence involving a series of incremental steps in each of which the selected valve or combination of valves results in the least amount of temperature change in the outlet temperature as compared with any other possible combination.

21.     Apparatus for providing a continuous, temperature controlled flow of liquid, comprising a first inlet for a first stream of liquid at a first temperature, a second inlet for a second stream of liquid at a second temperature which is lower than said first temperature, a valve means for controlling said first stream of liquid, a valve means for controlling said second stream of liquid, a common outlet for discharging said liquid streams as a combined, single outlet stream, means for continuously sensing the temperature of the outlet stream and means for automatically adjusting the relative settings of said valve means thereby to maintain said outlet temperature substantially constant, said apparatus being characterised by:

        (i)     a first plurality of on/off valves (14, 18, 22, 26) connected in parallel to said first inlet and to said outlet (74), said on/off valves each having only two settings: fully open or fully closed;

        (ii)    a second plurality of on/off valves (12, 16, 20, 24) connected in parallel to said second inlet and to said outlet (74), said on/off valves likewise each having only two settings: fully open or fully closed;

        iii)    a plurality of orifices (36, 38, 40, 42, 44, 46, 48, 50) associated with said valves, said plurality of orifices including a first set (38, 42, 46, 50) associated with said first plurality of valves (14, 18, 22, 26) and a second set (36, 40, 44, 48) associated with the second plurality of valves (12, 16, 20, 24), each of said first and second sets of orifices having openings arranged according to a predetermined relationship and comprising a first orifice that is of a smaller size than any other orifice of that set, and said first orifice of said first set being larger than the first orifice of the second set, and

        (iv)    means for selectively opening or shutting said valves thereby to vary the relative flow rates of the two liquid streams flowing through said first and second valve pluralities and their respective orifices into the common outlet, and thereby maintain the outlet temperature substantially constant.

22.    Apparatus according to claim 21, characterised in that all the orifices of the first set (38, 42, 46, 50) are larger than those of the second set (36, 40, 44, 48).

23.    Apparatus according to claim 21 or 22, characterised in that, within at least one of the sets of orifices (38, 42, 46, 50 and 36, 40, 44, 48) the sizes of the orifice openings are in a predetermined binary relationship.

24.    Apparatus according to claim 21, 22 or 23, characterised in that the orifices are upstream of their respective valves.

FIG. 1

```
                              ┌─────────────┐
                              │  DISPLAY    │
                              │  SET TEMP   │
                              └─────────────┘
   ┌─────────┐
   │  BEGIN  │
   └─────────┘
        │
        ▼                          NO
   ┌──────────┐              ╱─────────────╲
   │INITIALIZE:│             ╱   SWITCH      ╲
   │SET VALVES │◄────────────  ACCESSED      ╲
   │TO INITIAL │             ╲               ╱
   │STATE      │              ╲─────────────╱
   └──────────┘                     │ Yes
        │                           ▼
        ▼                    ╱─────────────╲     Yes  ┌──────────────┐
   ┌──────────┐             ╱   RAISE        ╲────────│ SET TEMP ←   │
   │READ      │             ╲ TEMPERATURE    ╱        │ SET TEMP +1  │
   │CURRENT   │              ╲─────────────╱          └──────────────┘
   │TEMPERATURE│                    │ No
   └──────────┘                     ▼
        │                    ╱─────────────╲     Yes  ┌──────────────┐
        ▼                   ╱   LOWER        ╲────────│ SET TEMP←    │
   ┌──────────┐             ╲ TEMPERATURE    ╱        │ SET TEMP -1  │
   │DISPLAY   │              ╲─────────────╱          └──────────────┘
   │CURRENT   │                    │ No
   │TEMPERATURE│                   ▼
   └──────────┘     No      ╱─────────────╲     Yes  ┌─────────┐
        │          ◄────────    OFF         ────────►│ RETURN  │
        ▼                   ╲─────────────╱          └─────────┘
   ┌──────────┐
   │ERROR     │
   │FACTOR    │
   │DETERMINED│
   └──────────┘
        │
        ▼
   ┌──────────┐
   │GO TO RANGE│
   │TABLE FOR │
   │NUMBER OF │
   │STEPS     │
   └──────────┘
        │
        ▼
   ┌──────────┐
   │OBTAIN VALVE│
   │POSITIONS │
   │FROM WATER │
   │MIXTURE   │
   │TABLE.    │
   └──────────┘
        │
        ▼
   ┌──────────┐
   │SET VALVES │
   │TO VALVE  │
   │SETTING   │
   │OBTAINED  │
   └──────────┘
```

FIG. 2

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| Y | US-A-4 409 694 (BARRETT et al.)<br><br>* column 5, lines 8-25; column 5, line 44 - column 7, line 18; figures 1, 5, 7 * | 1,13, 21 | G 05 D 23/13<br>G 05 D 11/16<br>E 03 C 1/05 |
| A | | 2-5,11 ,12,14 -17,23 ,24 | |
| Y | DE-A-2 836 698 (HANSA)<br><br>* page 6, lines 19-34; page 11, line 21 - page 13, line 11; figures 1, 3, 4, 5 * | 1,13, 21 | |
| A | | 7,19 | **TECHNICAL FIELDS SEARCHED (Int. Cl 4)** |
| A | US-A-2 991 481 (BOOK)<br><br>* column 2, lines 59-63; column 8, line 4 - column 9, line 55; figures 4, 7, 8 * | 13,15- 17,21 | G 05 D 23/00<br>G 05 D 11/00<br>G 05 D 7/00<br>E 03 C 1/00 |
| A | FR-A-2 482 241 (ADAR INDUSTRIE)<br><br>* page 1, line 15 - page 2, line 6; page 3, line 6 - page 7, line 2; figure 1 * | 4,5,15 ,16,23 | |

--- -/-

The present search report has been drawn up for all claims

| Place of search | Date of completion of the search | Examiner |
|---|---|---|
| BERLIN | 10-03-1986 | BEITNER M.J.J.B. |

## 0187484
Application number

**EUROPEAN SEARCH REPORT**

European Patent Office

EP 85 30 8915

Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | ADVANCE IN INSTRUMENTATION, vol. 33, part 1, 1978, pages 269-274; LANGILL: "All-digital control and metering of fuel gases to a steam boiler" <br> * page 269, "the digital valve concept" - page 270; page 272, lines 4-21; figures 1-4 * | 1-5,8, 14-17, 22-24 | |
| P,A | DE-U-8 429 669 (KUHN) <br> * page 3; figures 1-10 * | 6,18 | |
| A | US-A-3 635 086 (BERUCK) <br> * column 1, lines 30-51; column 2, lines 25-56; figures 1-3 * | 7,19 | |

TECHNICAL FIELDS SEARCHED (Int. Cl.4)

The present search report has been drawn up for all claims

| Place of search | Date of completion of the search | Examiner |
|---|---|---|
| BERLIN | 10-03-1986 | BEITNER M.J.J.B. |